# EUROPEAN PATENT APPLICATION

(11) **EP 4 431 457 A1**
(43) Date of publication of application: **18.09.2024**
(21) Application number: 22892418.9
(22) Date of filing: 16.09.2022
(51) Int. Cl.: C01F 7/785, C01G 9/00

(54) **METHOD FOR PRODUCING ION-EXCHANGED HYDROTALCITE**

(30) Priority: 10.11.2021 JP 2021183300
(71) Applicant: SETOLAS Holdings, Inc., Takamatsu-shi, Kagawa 760-0026 (JP)
(72) Inventor: KUROGI, Yusuke, Sakaide-shi, Kagawa 762-0012 (JP); NISHIMURA, Hiroshi, Sakaide-shi, Kagawa 762-0012 (JP)
(74) Representative: Vossius & Partner Patentanwälte Rechtsanwälte mbB
(86) International application number: PCT/JP2022/034809
(87) International publication number: WO 2023/084917

(57) **Abstract**

The present invention provides a novel method for producing an ion-exchanged hydrotalcite, the method including no complicated steps, needing no massive equipment, and enabling a hydrotalcite to be ion-exchanged while inhibiting the formation of a by-product, etc. This method for producing an ion-exchanged hydrotalcite (3) is characterized by comprising a first step, in which a powdery or pasty hydrotalcite (1) is mixed and reacted with an aqueous solution of an acid (2) so that the resultant mixture has a water content in the range of 10-60 mass%, and a second step, in which a reaction product obtained in the first step is dried and pulverized without via a cleaning step.

## Description

### FIELD

The present invention relates to a method for producing ion-exchanged hydrotalcite.

### BACKGROUND

In cases where two different substances are mixed, mixing liquids (slurries) together generally produces a more uniform dispersion than mixing powders (solids) together, and thus yields a more uniform mixture. The same applies for ion-exchange (intercalation) of hydrotalcite compounds (hereunder also referred to simply as "hydrotalcites"), where it is considered common knowledge that mixing together of liquids is necessary for reaction to accomplish sufficient ion-exchange of hydrotalcites.

Three commonly known methods for ion-exchange of hydrotalcites, i.e., for production of ion-exchanged hydrotalcites, are reconstitution, ion-exchange and coprecipitation, which are selected as appropriate depending on the combination of the hydrotalcite host substance and the guest substance (the substance to be intercalated).

A reconstitution process is one in which the hydrotalcite is preburned at high temperature to cause dissociation of at least some of the carbonic acid and interlayer water from the hydrotalcite, and the obtained heat decomposition product is combined with the guest substance in a solvent such as water so that the guest substance is taken up between the layers while the heat decomposition product returns to hydrotalcite. Specifically, the process includes a step of burning hydrotalcite at high temperature, a step of combining the hydrotalcite heat decomposition product with a guest substance in a solvent such as water and reacting them, a step of separating the solid reaction product from the reaction solution, and a step of drying and crushing the separated solid reaction product.

An ion-exchange process is one in which a hydrotalcite and an anionic guest substance are mixed in a solvent to intercalate the guest substance between the hydrotalcite layers. Specifically, the process includes a step of suspending a hydrotalcite in a solvent, a step of dropping a solution containing an anionic guest substance in the hydrotalcite suspension (slurry) and reacting them, a step of separating the solid reaction product from the reaction solution, and a step of drying and crushing the separated solid reaction product. One example of such an ion-exchange process is proposed in PTL 1, as a method in which carbonate ion-type layered double hydroxide (LDH) as the starting substance is subjected to decarboxylation reaction in a convenient and rapid manner using fewer and smaller amounts of reagents, to allow production of LDH having excellent anion exchange properties while maintaining crystal outline, crystal structure and crystallinity.

A coprecipitation process is one in which a solution of a divalent metal ion salt and a solution of a trivalent metal ion salt as hydrotalcite starting materials are dropped into a liquid solution or suspension of the guest substance in water, to synthesize hydrotalcite containing the guest substance.

### [CITATION LIST]

### [PATENT LITERATURE]

[PTL 1] International Patent Publication No. WO2012/102151

### SUMMARY

### [TECHNICAL PROBLEM]

However, since the step of burning the hydrotalcite at high temperature is essential in a conventional reconstitution process, and the step of mixing the solution or suspension is essential in an ion-exchange process or coprecipitation process, the steps are complicated and require large-scale equipment.

In the method of PTL 1 as well, which is an example of an ion-exchange process, a carbonate ion-type LDH must be contacted with an organic solvent containing an acidic compound, thus necessarily requiring organic solvent handling and waste water disposal which results in complex steps and large-scale equipment.

In addition, because these conventional processes require an excess of the guest substance with respect to the amount of ion-exchange desired, a washing step is essential for removal of the excess guest substance and by-products of the guest substance remaining in the system after the reaction (hereunder also referred to simply as "by-products"), thus necessitating equipment and waste water disposal for the washing step.

It is an object of the present invention to provide a novel method for producing ion-exchanged hydrotalcite which allows hydrotalcite to be ion-exchanged while inhibiting generation of by-products, and without requiring complicated steps or large-scale equipment.

### [SOLUTION TO PROBLEM]

As a result of extensive research with the goal of achieving the aforementioned object, the present inventors found that when a hydrotalcite (host substance) is mixed with a guest substance, the hydrotalcite can be sufficiently ion-exchanged, while inhibiting generation of by-products, by limiting the water content to a specific range that ensures the opportunity for contact between the host substance ions and the guest substance ions. The present invention has been completed based on these findings and includes at least the following aspects.

One aspect of the invention (aspect 1) is a method for producing ion-exchanged hydrotalcite which includes:
a first step in which a hydrotalcite powder or paste is mixed and reacted with an aqueous acid solution to a post-mixing water content in the range of 10 to 60 mass%, and
a second step in which the reaction product obtained from the first step is dried and crushed without a washing step.

Since the production method of aspect 1 has a first step in which a hydrotalcite powder or paste is mixed and reacted with an aqueous acid solution to a post-mixing water content in the range of 10 to 60 mass%, it allows hydrotalcite to be sufficiently ion-exchanged while inhibiting generation of by-products, without requiring complicated steps such as hydrotalcite burning steps, filtration steps or post-reaction washing steps, or large-scale equipment, which have been essential in conventional reconstitution, ion-exchange and coprecipitation processes.

Moreover, while conventional processes have required excess guest substance with respect to the desired amount of ion-exchange, the production method of aspect 1 can accomplish sufficient ion-exchange with an equal amount of guest substance with respect to the desired amount of ion-exchange (i.e., the amount of guest substance required is equal to the desired amount of ion-exchange), and the method therefore provides the advantage of easier control of ion-exchange amounts while also tending to inhibit residue of excess guest substance and organic solvent, and reducing environmental burden and production costs as a result.

The production method of aspect 1 also allows ion-exchange of anions that are water-insoluble, and thus provides the advantage of allowing production of special products for a variety of different purposes.

Another aspect (aspect 2) of the invention is the production method of aspect 1 wherein the hydrotalcite powder or paste is hydrotalcite represented by the following formula (1).

M²⁺₁₋ₓM³⁺ₓ(OH)₂Aⁿ⁻_{x/n}·mH₂O (1)

(Where M²⁺ represents a divalent metal ion, M³⁺ represents a trivalent metal ion, Aⁿ⁻represents an n-valent anion, x represents a number satisfying 0.18 ≤ x ≤ 0.4, n represents an integer of 1 to 4, and m represents a number satisfying 0 ≤ m ≤ 5).

The production method of aspect 2 can accomplish sufficient ion-exchange while inhibiting generation of by-products, even when the hydrotalcite powder or paste is highly versatile hydrotalcite represented by formula (1) above, and it can therefore be applied for a wide range of product designs suited for various purposes.

Another aspect (aspect 3) of the invention is the production method of aspect 2 wherein M²⁺ in formula (1) is one or more metal ions from among Mg²⁺ and Zn²⁺ ions, and M³⁺ is Al³⁺.

Since the hydrotalcite powder or paste in the production method of aspect 3 is the aforementioned specific hydrotalcite, the effect of aspect 2 can be even more reliably exhibited.

Another aspect (aspect 4) of the invention is the production method of aspect 2 or 3 wherein Aⁿ⁻ in formula (1) is CO₃²⁻.

Since the hydrotalcite powder or paste in the production method of aspect 4 is the aforementioned specific hydrotalcite and the anions between the hydrotalcite layers can be gasified and removed (as carbon dioxide gas) after ion-exchange, it is possible to more easily inhibit generation of by-products and to more reliably obviate the need for a washing step.

Yet another aspect (aspect 5) of the invention is the production method of any one of aspects 1 to 4 wherein the water content of the hydrotalcite powder or paste is in the range of 0 to 60 mass%.

Since the water content of the hydrotalcite powder or paste in the production method of aspect 5 is in the range of 0 to 60 mass%, reduction in viscosity during slurry formation is less likely, allowing mixture in the first step to be carried out more satisfactorily.

Yet another aspect (aspect 6) of the invention is the production method of any one of aspects 1 to 5, wherein the acid in the aqueous acid solution is at least one type of acid selected from the group consisting of an inorganic acid, inorganic acid salt, organic acid and organic acid salt.

Since the acid in the aqueous acid solution (the guest substance) is a specific acid according to the production method of aspect 6, it is possible to more reliably accomplish sufficient ion-exchange of hydrotalcite while inhibiting generation of by-products.

Yet another aspect (aspect 7) of the invention is the production method of any one of aspects 1 to 6 wherein the water content of the aqueous acid solution is in the range of 10 to 70 mass%.

Since the water content of the aqueous acid solution in the production method of aspect 7 is 10 mass% or greater, it is possible to limit reactivity to no higher than a certain level and avoid preferential surface reaction with particles, thereby helping to further prevent salt by-products and particle aggregation. Moreover, since the water content of the aqueous acid solution is 70 mass% or lower, it is possible to ensure a specified level of reactivity, so that ion-exchange reaction can take place more reliably.

Yet another aspect (aspect 8) of the invention is the production method of any one of aspects 1 to 7, wherein the first step further includes a step of supplying the aqueous acid solution onto the hydrotalcite powder or paste, the supply rate of the aqueous acid solution being 0.5 to 710 mass%/min with respect to the mass of the hydrotalcite.

Since the aqueous acid solution is supplied at a rate which is in a specific range during the first step of the production method of aspect 8, it is possible to ensure a constant level of productivity, while avoiding preferential surface reaction with particles, thereby helping to further prevent salt by-products and particle aggregation.

### [ADVANTAGEOUS EFFECTS OF INVENTION]

According to the production method of the invention it is possible to sufficiently ion-exchange hydrotalcite while inhibiting generation of by-products, and without requiring complicated steps or large-scale equipment which have been essential in conventional methods.

### BRIEF DESCRIPTION OF DRAWINGS

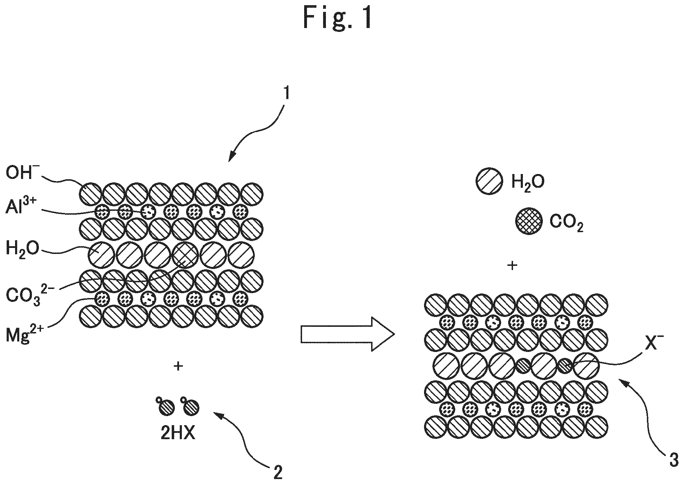

Fig. 1 is a schematic diagram illustrating ion-exchange reaction between hydrotalcite as the host substance and an acid as the guest substance in the first step of the production method of the invention.

### DESCRIPTION OF EMBODIMENTS

The method for producing ion-exchanged hydrotalcite according to the invention (hereunder also referred to simply as "production method of the invention") will now be described in detail.

### [Production method]

The production method of the invention is a method including a first step in which a hydrotalcite powder or paste is mixed and reacted with an aqueous acid solution to a post-mixing water content in the range of 10 to 60 mass%, and a second step in which the reaction product obtained from the first step is dried and crushed without a washing step.

Since the production method of the invention has, as a first step, a step in which a hydrotalcite powder or paste is mixed and reacted with an aqueous acid solution to a post-mixing water content in the range of 10 to 60 mass%, it allows hydrotalcite to be sufficiently ion-exchanged while inhibiting generation of by-products, without requiring complicated steps such as hydrotalcite burning steps, filtration steps or post-reaction washing steps, or large-scale equipment, which have been essential in conventional reconstitution, ion-exchange and coprecipitation processes.

Moreover, while conventional processes have required excess guest substance with respect to the desired amount of ion-exchange, the production method of the invention can accomplish sufficient ion-exchange with an equal amount of guest substance with respect to the desired amount of ion-exchange (i.e., the amount of guest substance required is equal to the desired amount of ion-exchange), and the method therefore provides the advantage of easier control of ion-exchange amounts while also tending to inhibit residue of excess guest substance and organic solvent, and reducing environmental burden and production costs as a result.

The production method of the invention also allows ion-exchange of anions that are water-insoluble, and thus provides the advantage of allowing production of special products for a variety of different purposes.

Each step in the production method of the invention will now be explained.

### [First step]

The first step in the production method of the invention is a step in which a hydrotalcite powder or paste is mixed and reacted with an aqueous acid solution to a post-mixing water content in the range of 10 to 60 mass%.

Specifically, the first step is carried out by the following procedure. A predetermined amount of hydrotalcite powder or paste is supplied into a reactor equipped with arbitrary stirring means, and then a predetermined amount of an aqueous acid solution is supplied while stirring, mixing the contents in the reactor for a predetermined time period for ion-exchange reaction between the hydrotalcite as a host substance and the acid as a guest substance. In the first step, the water content and supply rate of the hydrotalcite and the water concentration (water content) and amount of addition of the aqueous acid solution, as well as any additional water content as necessary, must be adjusted so that the water content in the mixture of the hydrotalcite and aqueous acid solution is in the range of 10 to 60 mass% with respect to the total mass of the mixture (100 mass%). The post-mixing water content of the hydrotalcite powder or paste and aqueous acid solution is preferably in the range of 20 to 60 mass%.

As used herein, the phrase "post-mixing water content is in the range of 10 to 60 mass%" means that "the water content of the mixture is in the range of 10 to 60 mass% with respect to the total mass of the mixture (100 mass%)".

Fig. 1 is a schematic diagram illustrating ion-exchange reaction between hydrotalcite as the host substance and an acid as the guest substance in the first step of the production method of the invention. The ion-exchange reaction shown in Fig. 1 is only an example for the first step of the production method of the invention, and the type of hydrotalcite and aqueous acid solution used for the invention is not restricted to those depicted in Fig. 1.

In the first step, as shown in Fig. 1, the hydrotalcite 1 as a host substance and the acid 2 (HX) as a guest substance are simply mixed with a specific water content of 10 to 60 mass%, allowing ion-exchange to take place between the anion (carbonate ion; CO₃²⁻ ) included between the layers of the hydrotalcite 1 and the anion (X⁻) produced from the acid 2 (HX). Ion-exchanged hydrotalcite 3 can be obtained as a result. In the example shown in Fig. 1, the carbonate ion (CO₃²⁻) included between the layers of the hydrotalcite 1 is removed as carbon dioxide gas (CO₂ gas) after ion-exchange.

Since the production method of the invention thus has, as a first step, mixing and reaction of hydrotalcite powder or paste with an aqueous acid solution with a specified water content of 10 to 60 mass%, it allows hydrotalcite to be sufficiently ion-exchanged while inhibiting generation of by-products, without requiring complicated steps, such as hydrotalcite burning steps, filtration steps or post-reaction washing steps, or large-scale equipment, which have been essential in conventional reconstitution, ion-exchange and coprecipitation processes. Moreover, since the production method of the invention allows sufficient ion-exchange to take place with an equal amount of guest substance with respect to the desired amount of ion-exchange, the method therefore provides the advantage of easier control of ion-exchange amounts while also tending to inhibit residue of excess guest substance and organic solvent, and reducing environmental burden and production costs as a result.

### (Hydrotalcite powder or paste)

In the production method of the invention, the hydrotalcite host substance to be used as starting material is not particularly restricted so long as it is hydrotalcite powder or paste, and any publicly known hydrotalcite may be used. Hydrotalcite paste is generally hydrotalcite with a water content of 60 mass% or lower having a predetermined viscosity and fluidity, and which at least in terms of water content is clearly distinct from hydrotalcite slurry which has a water content of greater than 60 mass%.

In the production method of the invention, the hydrotalcite powder or paste used as starting material is preferably hydrotalcite represented by the following formula (1).

M²⁺₁₋ₓM³⁺ₓ(OH)₂Aⁿ⁻_{x/n}·mH₂O (1)

(Where M²⁺ represents a divalent metal ion, M³⁺ represents a trivalent metal ion, Aⁿ⁻represents an n-valent anion, x represents a number satisfying 0.18 ≤ x ≤ 0.4, n represents an integer of 1 to 4, and m represents a number satisfying 0 ≤ m ≤ 5).

The production method of the invention can accomplish sufficient ion-exchange while inhibiting generation of by-products, even when the hydrotalcite powder or paste used as starting material is highly versatile hydrotalcite represented by formula (1) above, and it can therefore be applied to a wide range of product designs suited for various purposes.

More preferably for the hydrotalcite powder or paste, M²⁺ in formula (1) is one or more metal ions from among Mg²⁺ and Zn²⁺ ions, and M³⁺ is Al³⁺. If the hydrotalcite powder or paste used as starting material is this type of specific hydrotalcite, the aforementioned effect can be even more reliably obtained. More preferred combinations of metal species are MgAl, MgAlZn and ZnAl, and especially MgAl, for greater versatility for a variety of purposes.

From a different standpoint, the hydrotalcite powder or paste preferably has CO₃²⁻ as Aⁿ⁻ in formula (1). If the hydrotalcite powder or paste used as starting material is this type of specific hydrotalcite, then the anions included between the hydrotalcite layers can be gasified and removed (as carbon dioxide gas) after ion-exchange, as shown in Fig. 1, making it possible to more easily inhibit generation of by-products and to more reliably obviate the need for a washing step.

In the production method of the invention, the water content (i.e., water concentration) of the hydrotalcite powder or paste is not particularly restricted so long as it is an amount such that the water content after mixing with the aqueous acid solution can be adjusted to within the range of 10 to 60 mass%, but the water content may be 60 mass% or lower as the upper limit for the water content in hydrotalcite paste. The water content of the hydrotalcite powder or paste is the mass ratio (mass%) of water present in the hydrotalcite powder or paste with respect to the total mass of the hydrotalcite powder or paste (100 mass%).

The water content of the hydrotalcite powder or paste is preferably 0 mass% or greater, and therefore in the range of 0 to 60 mass%, more preferably in the range of 0 to 50 mass% and most preferably in the range of 0 to 10 mass%. If the water content of the hydrotalcite powder or paste is in the range of 0 to 60 mass%, reduction in viscosity during slurry formation is less likely, allowing mixture in the first step to be carried out more satisfactorily.

### (Aqueous acid solution)

In the production method of the invention, the acid as a guest substance is used in the form of an aqueous acid solution dissolved in water. The pH of the aqueous acid solution is 6 or lower. The type of acid in the aqueous acid solution is not particularly restricted, and any acid may be employed depending on the desired product quality, but at least one type of acid selected from the group consisting of inorganic acids, inorganic acid salts, organic acids and organic acid salts is preferred. If the acid in the aqueous acid solution, which is the guest substance, is such a type of specific acid, it will be possible to more reliably accomplish sufficient ion-exchange of hydrotalcite while inhibiting generation of by-products.

An inorganic acid to be included in the aqueous acid solution is not particularly restricted, and examples include hydrochloric acid, nitric acid, phosphoric acid, sulfuric acid, carbonic acid, boric acid, hydroiodic acid, hydrobromic acid, hydrofluoric acid, chloric acid, perchloric acid, phosphonic acid, iodic acid, sulfurous acid and chlorosulfonic acid. Preferred inorganic acids are nitric acid, phosphoric acid and perchloric acid. An inorganic acid salt to be included in the aqueous acid solution may be a sodium salt, potassium salt, magnesium salt, zinc salt, calcium salt or ammonium salt of any of the aforementioned inorganic acids.

An organic acid to be included in the aqueous acid solution is not particularly restricted, and examples include formic acid, acetic acid, citric acid, oxalic acid, malic acid, succinic acid, butyric acid, propionic acid, gluconic acid, tartaric acid, lactic acid, fumaric acid, and anionic surfactants. Preferred organic acids are acetic acid, citric acid, oxalic acid and succinic acid. An organic acid salt to be included in the aqueous acid solution may be a sodium salt, potassium salt, magnesium salt, zinc salt, calcium salt or ammonium salt of any of the aforementioned organic acids.

The water content of the aqueous acid solution used for the production method of the invention is not particularly restricted so long as it is a content such that the water content after mixing with the hydrotalcite powder or paste can be adjusted to within the range of 10 to 60 mass%, but it is preferably in the range of 10 to 70 mass% and more preferably in the range of 20 to 50 mass%, with respect to the total mass of the aqueous acid solution (100 mass%). If the water content of the aqueous acid solution is 10 mass% or greater, it will be possible to limit reactivity to no higher than a certain level and avoid preferential surface reaction with particles, thereby helping to further prevent salt by-products and particle aggregation. Moreover, if the water content of the aqueous acid solution is 70 mass% or lower, it will be possible to ensure a specified level of reactivity, so that ion-exchange reaction can take place more reliably.

### (Aqueous acid solution supply step)

In the production method of the invention, the aqueous acid solution is supplied into a reactor equipped with arbitrary stirring means, into which a predetermined amount of hydrotalcite powder or paste has been supplied. Specifically, the first step of the production method of the invention further includes a step of stirring a hydrotalcite powder or paste while supplying an aqueous acid solution (hereunder also referred to simply as "aqueous acid solution supply step").

In the aqueous acid solution supply step, the supply rate of the aqueous acid solution is not particularly restricted so long as the effect of the invention is not inhibited, but it is preferably 0.5 to 710 mass%/min (supply time: 0.06 to 80 min), and more preferably 1.0 to 8.5 mass%/min (supply time: 5 to 42 min), with respect to the mass of the hydrotalcite which is the host substance (100 mass%). If the aqueous acid solution is supplied at a rate which is in this specific range during the first step, it will be possible to ensure a constant level of productivity while avoiding preferential surface reaction with particles, thereby helping to further prevent salt by-products and particle aggregation.

### (Mixing step)

In the first step, the hydrotalcite powder or paste and aqueous acid solution in the reactor are mixed for a predetermined time period with the stirring means of the reactor. Specifically, the first step further includes a step of mixing the hydrotalcite powder or paste with the aqueous acid solution (hereunder also referred to simply as "mixing step"). Since the mixing step is a step of mixing a predetermined amount of the hydrotalcite powder or paste with a predetermined amount of the aqueous acid solution, the stage before the predetermined amount of the aqueous acid solution is reached (i.e., the aqueous acid solution supply step) is not included in the mixing step.

The reactor equipped with stirring means to be used for mixing the hydrotalcite powder or paste and the aqueous acid solution in the mixing step is not particularly restricted so long as it allows mixing of the entire mixing contents by applying adequate stress to the mixing contents, and any mixing machine publicly known in the field may be employed. Examples of such mixing machines include batch kneaders, planetary mixers and crushers.

The conditions (e.g., temperature and time) for the mixing step are not particularly restricted so long as they are conditions allowing adequate mixing between the hydrotalcite powder or paste and the aqueous acid solution, and for example, the mixing temperature (i.e., the reaction temperature for the ion-exchange reaction) may be in the range of 20 to 80°C.

The mixing time (i.e., the reaction time for the ion-exchange reaction) will differ in terms of the appropriate mixing end point, depending on the stress produced by the mixing machine that is used, and it may therefore be set as follows. First, 10 g of the mixture is sampled and suspended in 100 mL of ion-exchanged water. The pH of the obtained suspension is measured and the point at which the pH change becomes pH 0.5/hr or lower is recorded as the mixing end point (i.e. the reaction end point). When using a common mixing machine, a general target mixing time is 1 to 300 minutes.

The production method of the invention allows ion-exchange reaction of a hydrotalcite as the host substance and an acid as the guest substance, by carrying out this manner of mixing in first step. The reaction product obtained after the ion-exchange reaction is supplied to the subsequent second step.

### [Second step]

The second step of the production method of the invention is a step in which the reaction product obtained from the first step is dried and crushed without a washing step.

Specifically, the second step is carried out by the following procedure. The paste-like reaction product obtained from the first step is conveyed directly into an arbitrary dryer without passing through a washing step, and is dried in the dryer. The dried reaction product is then conveyed to an arbitrary crusher where it is crushed to obtain ion-exchanged hydrotalcite with a predetermined (e.g., powdered or granular) shape.

In the first step of the production method of the invention, a hydrotalcite powder or paste and an aqueous acid solution are mixed in the presence of a predetermined water content of 10 to 60 mass% for reaction, thus allowing adequate ion-exchange of the hydrotalcite while inhibiting formation of by-products, and especially allowing adequate ion-exchange with an equivalent amount of guest substance with respect to the desired amount of ion-exchange, so that residue of excess guest substance or organic solvent is less likely to be generated and the paste-like reaction product obtained in the first step can be dried and crushed directly during the second step without a washing step.

### (Drying step)

In the second step, the reaction product obtained from the first step is dried using an arbitrary dryer. Specifically, the second step further includes a step of drying the reaction product obtained in the first step (hereunder also referred to simply as "drying step").

The dryer used in the drying step is not particularly restricted, so long as it can thoroughly dry the reaction product, and any publicly known dryer may be employed. Examples of such a dryer include an airflow dryer, a band dryer, a vacuum dryer and a spray drier. The conditions (e.g., temperature and time) used in the drying step may be any conditions suitable for the type and performance of the dryer that is used.

### (Crushing step)

In the second step, the reaction product that has been dried by the drying step is crushed to a predetermined shape by an arbitrary crusher. Specifically, the second step further includes a step of crushing the dried reaction product (hereunder also referred to simply as "crushing step").

The crusher used for the crushing step is not particularly restricted so long as it can crush the dried reaction product into the desired shape (e.g., a powder or granules), and any publicly known crusher may be employed. Examples of such a crusher include a hammer mill, a jet mill and a ball mill. The conditions (e.g., crushing time) for the crushing step may be any conditions suitable for the type and performance of the crusher that is used.

The production method of the invention can yield ion-exchanged hydrotalcite having a predetermined shape, by carrying out the aforementioned crushing step in the second step.

The production method of the invention may also include additional steps other than the first step and second step (e.g., a sorting step), in a range that does not interfere with the object and gist of the invention. The production method of the invention is also not restricted to the aforementioned embodiment or the Examples described below, and can incorporate appropriate combinations, substitutions and modifications within a range that is not outside of the object and gist of the invention.

### EXAMPLES

The invention will now be explained in greater detail using Examples and Comparative Examples, with the understanding that the invention is not limited only to these Examples. Throughout the following Examples, hydrotalcite may be abbreviated as "HT".

### (Example 1)

While feeding 50 g of a carbonate ion-type hydrotalcite (HT) compound powder (Mg_{0.667}Al_{0.333}(OH)₂(CO₃)_{0.165}·0.5H₂O) into a Raikai crusher (Ishikawa Stirrer/Crusher No.20 by Ishikawa Kojo Co., Ltd.) and stirring, 53 mL of a 4 mol/L aqueous nitric acid solution at the mixing ratio shown in Table 1 was supplied for approximately 1 minute at a rate of 26 mass%/min. Reaction was then conducted while continuing mixing for 10 minutes, to obtain a paste-like reaction product. The obtained paste-like reaction product was evaporated to dryness in a dryer (Drying Oven DS44 by Yamato Scientific Co., Ltd.) and crushed with a crusher (KIIW-1 Sample Mill by Fuji Paudal Co., Ltd.), after which it was sifted with a 100 mesh wire mesh to obtain a test sample (ion-exchanged hydrotalcite) for Example 1.

The structure of the test sample of Example 1 obtained in this manner was confirmed by X-ray diffraction using a "EMPYRIAN" by PANalytical Co., and found to be a mixture of a nitrate ion-type HT compound and a carbonate ion-type HT compound. The ion-exchange amount was determined as the diffraction intensity ratio a/b, where "a" is the X-ray diffraction line intensity (position: 20 = approximately 9.9°) for the nitrate ion-type HT compound and "b" is the diffraction line intensity (position: 20 = approximately 11.6°) for the carbonate ion-type HT compound. Table 1 shows the analysis results for the test sample of Example 1.

### (Comparative Example 1)

A 50 g portion of powder of a carbonate ion-type HT compound (Mg_{0.667}Al_{0.333}(OH)₂(CO₃)_{0.165}·0.5H₂O) was placed in a 1 L-volume beaker, and ion-exchanged water was added to prepare a 6 mass% aqueous slurry. The aqueous slurry was heated to 80°C and stirred. A 53 mL portion of a 4 mol/L aqueous nitric acid solution was supplied into the aqueous slurry to the mixing ratio shown in Table 1, for about 1 minute at a rate of 26 mass%/min. Reaction was then conducted while continuing mixing for 60 minutes, to obtain a slurry-like reaction product. The obtained slurry-like reaction product was dewatered with a suction filter and washed with a 20-fold volume of ion-exchanged water with respect to the solid content, and further dewatered. The obtained dehydrated product was evaporated to dryness in a dryer (Drying Oven DS44 by Yamato Scientific Co., Ltd.) and crushed with a crusher (KIIW-1 Sample Mill by Fuji Paudal Co., Ltd.), after which it was sifted with a 100 mesh wire mesh to obtain a test sample for Comparative Example 1. The ion-exchange amount was determined in the same manner as Example 1. Table 1 shows the analysis results for the test sample of Comparative Example 1.

**[Table 1]**

| | | Example 1 | Comp. Example 1 |
|---|---|---|---|
| Production conditions | HT raw material | Mg_{0.667}Al_{0.333}(OH)₂(CO₃)_{0.165}·0.5H₂O | Mg_{0.667}Al_{0.333}(OH)₂(CO₃)_{0.165}·0.5H₂O |
| | Water content of HT raw material (mass%) (state) | 0 (powder) | 94 (slurry) |
| | Guest substance | HNO₃ | HNO₃ |
| | Water content of guest substance (mass%) (state) | 21.9 (solution) | 21.9 (solution) |
| | Post-mixing water content (mass%) (state) | 42 (paste) | 94 (slurry) |
| | Nitric acid addition (eq): NO₃/Al₂O₃ | 2.1 | 2.1 |
| | Supply rate (mass%/min) | 26 | 26 |
| | Supply time (min) | 1 | 1 |
| | Reaction temperature (°C) | 25 | 80 |
| | Reaction time (min) | 10 | 60 |
| | Post reaction steps (after first step) | Drying/crushing/sorting | Dewatering/washing and drying/crushing/sorting |
| Reaction product | Nitric acid content of reaction product (eq): NO₃/Al₂O₃ | 2.0 | 1.2 |
| | Diffraction intensity ratio: a/b | 46.9 | 2.3 |

### (Example 2)

While feeding 50 g of a carbonate ion-type HT compound powder (Mg_{0.667}Al_{0.333}(OH)₂(CO₃)_{0.165}·0.5H₂O) into a Raikai crusher (Ishikawa Stirrer/Crusher No.20 by Ishikawa Kojo Co., Ltd.) and stirring, 15 mL of a 4 mol/L aqueous phosphoric acid solution at the mixing ratio shown in Table 2 was supplied for approximately 1 minute at a rate of 47.7 mass%/min. Reaction was then conducted while continuing mixing for 10 minutes, to obtain a paste-like reaction product. The obtained paste-like reaction product was evaporated to dryness in a dryer (Drying Oven DS44 by Yamato Scientific Co., Ltd.) and crushed with a crusher (KIIW-1 Sample Mill by Fuji Paudal Co., Ltd.), after which it was sifted with a 100 mesh wire mesh to obtain a test sample for Example 2.

The structure of the test sample of Example 2 obtained in this manner was confirmed by X-ray diffraction using a "EMPYRIAN" by PANalytical Co., and found to be a mixture of a phosphate ion-type HT compound and a carbonate ion-type HT compound. The ion-exchange amount was determined as the diffraction intensity ratio c/b, where "c" is the X-ray diffraction line intensity (position: 20 = approximately 10.6°) for the phosphate ion-type HT compound and "b" is the diffraction line intensity (position: 20 = approximately 11.6°) for the carbonate ion-type HT compound. Table 2 shows the analysis results for the test sample of Example 2.

### (Comparative Example 2)

A 50 g portion of powder of a carbonate ion-type HT compound (Mg_{0.667}Al_{0.333}(OH)₂(CO₃)_{0.165}·0.5H₂O) was placed in a 1 L-volume beaker, and ion-exchanged water was added to prepare a 6 mass% aqueous slurry. The aqueous slurry was heated to 80°C and stirred. A 15 mL portion of a 4 mol/L aqueous phosphoric acid solution was supplied into the aqueous slurry to the mixing ratio shown in Table 2, for about 1 minute at a rate of 47.7 mass%/min. Reaction was then conducted while continuing mixing for 60 minutes, to obtain a slurry-like reaction product. The obtained slurry-like reaction product was dewatered with a suction filter and washed with a 20-fold volume of ion-exchanged water with respect to the solid content, and further dewatered. The obtained dehydrated product was evaporated to dryness in a dryer (Drying Oven DS44 by Yamato Scientific Co., Ltd.) and crushed with a crusher (KIIW-1 Sample Mill by Fuji Paudal Co., Ltd.), after which it was sifted with a 100 mesh wire mesh to obtain a test sample for Comparative Example 2. The ion-exchange amount was determined in the same manner as Example 2. Table 2 shows the analysis results for the test sample of Comparative Example 2.

**[Table 2]**

| | | Example 2 | Comp. Example 2 |
|---|---|---|---|
| Production conditions | HT raw material | Mg_{0.}667Al_{0.333}(OH)₂(CO₃)_{0.165}·0.5H₂O | Mg_{0.667}Al_{0.333}(OH)₂(CO₃)_{0.165}·0.5H₂O |
| | Water content of HT raw material (mass%) (state) | 0 (powder) | 94 (slurry) |
| | Guest substance | H₃PO₄ | H₃PO₄ |
| | Water content of guest substance (mass%) (state) | 40 (solution) | 40 (solution) |
| | Post-mixing water content (mass%) (state) | 21 (paste) | 94 (slurry) |
| | Phosphoric acid addition (eq): PO₄/Al₂O₃ | 1.0 | 1.0 |
| | Supply rate (mass%/min) | 47.7 | 47.7 |
| | Supply time (min) | 1 | 1 |
| | Reaction temperature (°C) | 25 | 80 |
| | Reaction time (min) | 10 | 60 |
| | Post reaction steps (after first step) | Drying/crushing/sorting | Dewatering/washing and drying/crushing/sorting |
| Reaction product | Phosphoric acid content of reaction product (eq): PO₄/Al₂O₃ | 1.0 | 0.9 |
| | Diffraction intensity ratio: c/b | 0.7 | 0 |

### (Example 3)

While feeding 1100 g of a carbonate ion-type HT compound powder (Mg_{0.667}Al_{0.333}(OH)₂(CO₃)_{0.165}·0.5H₂O) into a batch kneader (PELLETER EXDF-60 by Fuji Paudal Co., Ltd.) and stirring, 840 mL of a 5.3 mol/L aqueous perchloric acid solution at the mixing ratio shown in Table 3 was supplied for about 5 minutes at a rate of 19.8 mass%/min. Reaction was then conducted while continuing mixing for 30 minutes, to obtain a paste-like reaction product. The obtained paste-like reaction product was evaporated to dryness in a dryer (Drying Oven DS44 by Yamato Scientific Co., Ltd.) and crushed with a crusher (KIIW-1 Sample Mill by Fuji Paudal Co., Ltd.), after which it was sifted with a 100 mesh wire mesh to obtain a test sample for Example 3.

The structure of the test sample of Example 3 obtained in this manner was confirmed by X-ray diffraction using a "EMPYRIAN" by PANalytical Co., and found to be a mixture of a perchlorate ion-type HT compound and a carbonate ion-type HT compound. The ion-exchange amount was determined as the diffraction intensity ratio d/b, where "d" is the X-ray diffraction line intensity (position: 20 = approximately 19.5°) for the perchlorate ion-type HT compound and "b" is the diffraction line intensity (position: 20 = approximately 11.6°) for the carbonate ion-type HT compound. Table 3 shows the analysis results for the test sample of Example 3.

The particle size of the test sample of Example 3 was also measured in the following manner. First, 70 mL of a 0.2 mass% aqueous sodium hexametaphosphate solution was taken into a 100 mL glass beaker, and 0.7 g of the dried test sample powder was added prior to carrying out 3 minutes of ultrasonic treatment. The volume-based cumulative 50% particle diameter (d50) and the volume frequency of particle diameters of greater than 5 µm (> 5 µm) of the aqueous solution were measured using a laser diffraction scattering particle size distribution apparatus (MT3000, product of Nikkiso Co., Ltd.). The particle diameter measurement results are shown in Table 3 below.

### (Example 4)

A test sample for Example 4 was obtained in the same manner as Example 3, except that an 840 mL portion of a 5.3 mol/L aqueous perchloric acid solution was supplied to the mixing ratio shown in Table 3, for about 10 minutes at a rate of 9.9 mass%/min. The ion-exchange amount and particle diameter were measured in the same manner as Example 3. The results are shown in Table 3.

### (Example 5)

A test sample for Example 5 was obtained in the same manner as Example 3, except that an 840 mL portion of a 5.3 mol/L aqueous perchloric acid solution was supplied to the mixing ratio shown in Table 3, for about 20 minutes at a rate of 5.0 mass%/min. The ion-exchange amount and particle diameter were measured in the same manner as Example 3. The results are shown in Table 3.

### (Example 6)

While feeding 2283 g of a carbonate ion-type HT compound paste (Mg_{0.667}Al_{0.333}(OH)₂(CO₃)_{0.165}·0.5H₂O) having a water content of 48.2 mass% into a batch kneader (PELLETER EXDF-60 by Fuji Paudal Co., Ltd.) and stirring, 840 mL of a 5.3 mol/L aqueous perchloric acid solution at the mixing ratio shown in Table 3 was supplied for about 5 minutes at a rate of 19.8 mass%/min. Reaction was then conducted while continuing mixing for 60 minutes, to obtain a paste-like reaction product. The obtained paste-like reaction product was evaporated to dryness in a dryer (Drying Oven DS44 by Yamato Scientific Co., Ltd.) and crushed with a crusher (KIIW-1 Sample Mill by Fuji Paudal Co., Ltd.), after which it was sifted with a 100 mesh wire mesh to obtain a test sample for Example 6. The ion-exchange amount and particle diameter were measured in the same manner as Example 3. The results are shown in Table 3.

### (Comparative Example 3)

A 50 g portion of powder of a carbonate ion-type HT compound(Mg_{0.667}Al_{0.333}(OH)₂(CO₃)_{0.165}·0.5H₂O) was placed in a 1 L-volume beaker, and ion-exchanged water was added to prepare a 10 mass% aqueous slurry. The aqueous slurry was heated to 40°C and stirred. A 38 mL portion of a 5.3 mol/L aqueous perchloric acid solution was supplied into the aqueous slurry to the mixing ratio shown in Table 3, for about 40 minutes at a rate of 2.5 mass%/min. Reaction was then conducted while continuing mixing for 60 minutes, to obtain a slurry-like reaction product. The obtained slurry-like reaction product was dewatered with a suction filter and washed with a 20-fold volume of ion-exchanged water with respect to the solid content, and further dewatered. The obtained dehydrated product was evaporated to dryness in a dryer (Drying Oven DS44 by Yamato Scientific Co., Ltd.) and crushed with a crusher (KIIW-1 Sample Mill by Fuji Paudal Co., Ltd.), after which it was sifted with a 100 mesh wire mesh to obtain a test sample for Comparative Example 3. The ion-exchange amount and particle diameter were measured in the same manner as Example 3. The results are shown in Table 3.

**[Table 3]**

| | | Example 3 | Example 4 | Example 5 | Example 6 | Comp. Example 3 |
|---|---|---|---|---|---|---|
| Production conditions | HT raw material | Mg_{0.667}Al_{0.333}(OH)₂(C O₃)_{0.165}·0.5H₂O | Mg_{0.667}Al_{0.333}(OH)₂(C O₃)_{0.165}·0.5H₂O | Mg_{0.667}Al_{0.333}(OH)₂(C O₃)_{0.165}·0.5H₂O | Mg_{0.667}Al_{0.333}(OH)₂(C O₃)_{0.165}·0.5H₂O | Mg_{0.667}Al_{0.333}(OH)₂(CO₃)_{0.1 65}·0.5H₂O |
| | Water content of HT raw material (mass%) (state) | 0 (powder) | 0 (powder) | 0 (powder) | 48 (paste) | 90 (slurry) |
| | Guest substance | HClO₄ | HClO₄ | HClO₄ | HClO₄ | HClO₄ |
| | Water content of guest substance (mass%) (state) | 40 (solution) | 40 (solution) | 40 (solution) | 40 (solution) | 40 (solution) |
| | Post-mixing water content (mass%) (state) | 32 (paste) | 32 (paste) | 32 (paste) | 57 (paste) | 91 (slurry) |
| | Perchloric acid addition (eq): ClO₄/Al₂O₃ | 2.0 | 2.0 | 2.0 | 2.0 | 2.0 |
| | Supply rate (mass%/min) | 19.8 | 9.9 | 5.0 | 19.8 | 2.5 |
| | Supply time (min) | 5 | 10 | 20 | 5 | 40 |
| | Reaction temperature (°C) | 25 | 25 | 25 | 25 | 40 |
| | Reaction time (min) | 30 | 30 | 30 | 60 | 60 |
| | Post reaction steps (after first step) | Drying/crushing/sorting | Drying/crushing/sorting | Drying/crushing/sorting | Drying/crushing/sorting | Dewatering/washing and drying/crushing/sorting |
| Reaction product | Perchloric acid content of reaction product (eq): ClO₄/Al₂O₃ | 1.9 | 1.9 | 1.9 | 1.9 | 0.5 |
| | Diffraction intensity ratio: d/b | 33.8 | 28.1 | 48.2 | 4.0 | 0.1 |
| | D50 (µm) | 1.18 | 0.85 | 0.71 | 1.31 | 1.74 |
| | >5 µm (vol%) | 8.4 | 0.9 | 0.3 | 11.4 | 20.7 |

### (Example 7)

While feeding 50 g of a carbonate ion-type HT compound powder (Mg_{0.502}Zn_{0.165}Al_{0.333}(OH)₂(CO₃)_{0.165}·0.5H₂O) into a Raikai crusher (Ishikawa Stirrer/Crusher No.20 by Ishikawa Kojo Co., Ltd.) and stirring, 53 mL of a 4 mol/L aqueous nitric acid solution at the mixing ratio shown in Table 4 was supplied for approximately 1 minute at a rate of 26 mass%/min. Reaction was then conducted while continuing mixing for 10 minutes, to obtain a paste-like reaction product. The obtained paste-like reaction product was evaporated to dryness in a dryer (Drying Oven DS44 by Yamato Scientific Co., Ltd.) and crushed with a crusher (KIIW-1 Sample Mill by Fuji Paudal Co., Ltd.), after which it was sifted with a 100 mesh wire mesh to obtain a test sample for Example 7.

The structure of the test sample of Example 7 obtained in this manner was confirmed by X-ray diffraction in the same manner as Example 1, and the sample was found to be a nitrate ion-type HT compound. The ion-exchange amount was determined in the same manner as Example 1. Table 4 shows the analysis results for the test sample of Example 7.

### (Comparative Example 4)

A 50 g portion of powder of a carbonate ion-type HT compound(Mg_{0.502}Zn_{0.165}Al_{0.333}(OH)₂(CO₃)_{0.165}·0.5H₂O) was placed in a 1 L-volume beaker, and ion-exchanged water was added to prepare a 6 mass% aqueous slurry. The aqueous slurry was heated to 80°C and stirred. A 53 mL portion of a 4 mol/L aqueous nitric acid solution was supplied into the aqueous slurry to the mixing ratio shown in Table 4, for about 1 minute at a rate of 26 mass%/min. Reaction was then conducted while continuing mixing for 60 minutes, to obtain a slurry-like reaction product. The obtained slurry-like reaction product was dewatered with a suction filter and washed with a 20-fold volume of ion-exchanged water with respect to the solid content, and further dewatered. The obtained dehydrated product was evaporated to dryness in a dryer (Drying Oven DS44 by Yamato Scientific Co., Ltd.) and crushed with a crusher (KIIW-1 Sample Mill by Fuji Paudal Co., Ltd.), after which it was sifted with a 100 mesh wire mesh to obtain a test sample for Comparative Example 4. The ion-exchange amount was determined in the same manner as Example 1. Table 4 shows the analysis results for the test sample of Comparative Example 4.

### (Example 8)

While feeding 50 g of a carbonate ion-type HT compound powder (Zn_{0.667}Al_{0.333}(OH)₂(CO₃)_{0.165}·0.5H₂O) into a Raikai crusher (Ishikawa Stirrer/Crusher No.20 by Ishikawa Kojo Co., Ltd.) and stirring, 53 mL of a 4 mol/L aqueous nitric acid solution at the mixing ratio shown in Table 4 was supplied for approximately 1 minute at a rate of 26 mass%/min. Reaction was then conducted while continuing mixing for 10 minutes, to obtain a paste-like reaction product. The obtained paste-like reaction product was evaporated to dryness in a dryer (Drying Oven DS44 by Yamato Scientific Co., Ltd.) and crushed with a crusher (KIIW-1 Sample Mill by Fuji Paudal Co., Ltd.), after which it was sifted with a 100 mesh wire mesh to obtain a test sample for Example 8.

The structure of the test sample of Example 8 obtained in this manner was confirmed by X-ray diffraction in the same manner as Example 1, and the sample was found to be a nitrate ion-type HT compound. The ion-exchange amount was determined in the same manner as Example 1. Table 4 shows the analysis results for the test sample of Example 8.

**[Table 4]**

| | | Example 7 | Comp. Example 4 | Example 8 |
|---|---|---|---|---|
| Production conditions | HT raw material | Mg_{0.502}Zn_{0.165}Al_{0.333}(OH) ₂(CO₃)_{0.165}·0.5H₂O | Mg_{0.502}Zn_{0.165}Al_{0.333}(OH) ₂(CO₃)_{0.165}·0.5H₂O | Zn_{0.667}Al_{0.333}(OH)₂(C O₃)_{0.165}·0.5H₂O |
| | Water content of HT raw material (mass%) (state) | 0 (powder) | 94 (slurry) | 0 (powder) |
| | Guest substance | HNO₃ | HNO₃ | HNO₃ |
| | Water content of guest substance (mass%) (state) | 21.9 (solution) | 21.9 (solution) | 21.9 (solution) |
| | Post-mixing water content (mass%) (state) | 42 (paste) | 94 (slurry) | 42 (paste) |
| | Nitric acid addition (eq): NO₃/Al₂O₃ | 2.1 | 2.1 | 2.1 |
| | Supply rate (mass%/min) | 26 | 26 | 26 |
| | Supply time (min) | 1 | 1 | 1 |
| | Reaction temperature (°C) | 25 | 80 | 25 |
| | Reaction time (min) | 10 | 60 | 10 |
| | Post reaction steps (after first step) | Drying/crushing/sorting | Dewatering/washing and drying/crushing/sorting | Drying/crushing/sorting |
| Reaction product | Nitric acid content of reaction product (eq): NO₃/Al₂O₃ | 1.9 | 0.9 | 1.9 |
| | Diffraction intensity ratio: a/b | b = 0 | 1.4 | b = 0 |

The results of comparing Examples 1 to 8 with Comparative Examples 1 to 4 shown in Tables 1 to 4 demonstrated that mixing and reacting a hydrotalcite powder or paste with an aqueous acid solution to a post-mixing water content in the range of 10 to 60 mass%, allows hydrotalcite to be sufficiently ion-exchanged while inhibiting generation of by-products, without requiring complicated steps, such as hydrotalcite burning steps, filtration steps or post-reaction washing steps, or large-scale equipment. It was also demonstrated by Examples 1 to 8 that sufficient ion-exchange was possible with the guest substance in an equivalent amount with respect to the desired amount of ion-exchange.

### INDUSTRIAL APPLICABILITY

Ion-exchanged hydrotalcite obtained by the production method of the invention can be utilized for a wide variety of purposes requiring hydrotalcite, including resin additives (e.g., heat stabilizers, anti-staining agents or flame retardants), adsorbents or drugs (e.g., DDS).

### REFERENCE SIGNS LIST

1 Hydrotalcite
2 Acid
3 Ion-exchanged hydrotalcite

## Claims

1. A method of producing ion-exchanged hydrotalcite which includes:
a first step in which a hydrotalcite powder or paste is mixed and reacted with an aqueous acid solution to a post-mixing water content in a range of 10 to 60 mass%, and
a second step in which a reaction product obtained from the first step is dried and crushed without a washing step.

2. The method according to claim 1, wherein the hydrotalcite powder or paste is hydrotalcite represented by formula (1).
M²⁺₁₋ₓM³⁺ₓ(OH)₂Aⁿ⁻_{x/n}·mH₂O (1)
(Where M²⁺ represents a divalent metal ion, M³⁺ represents a trivalent metal ion, Aⁿ⁻represents an n-valent anion, x represents a number satisfying 0.18 ≤ x ≤ 0.4, n represents an integer of 1 to 4, and m represents a number satisfying 0 ≤ m ≤ 5).

3. The method according to claim 2, wherein M²⁺ in formula (1) is one or more metal ions from among Mg²⁺ and Zn²⁺ ions, and M³⁺ is Al³⁺.

4. The method according to claim 2 or 3, wherein Aⁿ⁻ in formula (1) is CO₃²⁻.

5. The method according to any one of claims 1 to 4, wherein a water content of the hydrotalcite powder or paste is in a range of 0 to 60 mass%.

6. The method according to any one of claims 1 to 5, wherein an acid in the aqueous acid solution is at least one type of acid selected from a group consisting of an inorganic acid, inorganic acid salt, organic acid and organic acid salt.

7. The method according to any one of claims 1 to 6, wherein a water content of the aqueous acid solution is in a range of 10 to 70 mass%.

8. The method according to any one of claims 1 to 7, wherein the first step further includes a step of supplying the aqueous acid solution onto the hydrotalcite powder or paste, a supply rate of the aqueous acid solution being 0.5 to 710 mass%/min with respect to a mass of the hydrotalcite.

## Amended claims

### Amended claims under Art. 19.1 PCT

1. (Corrected) A method of producing ion-exchanged hydrotalcite which includes:
a first step in which a hydrotalcite powder or paste is mixed and reacted with an aqueous acid solution to a post-mixing water content in a range of 10 to 60 mass%, and
a second step in which a reaction product obtained from the first step is dried and crushed without a washing step,
wherein a water content of the hydrotalcite powder or paste is in a range of 0 to 60 mass%.

2. The method according to claim 1, wherein the hydrotalcite powder or paste is hydrotalcite represented by formula (1).
M²⁺₁₋ₓM³⁺ₓ(OH)₂Aⁿ⁻_{x/n}·mH₂O (1)
(Where M²⁺ represents a divalent metal ion, M³⁺ represents a trivalent metal ion, Aⁿ⁻ represents an n-valent anion, x represents a number satisfying 0.18 ≤ x ≤ 0.4, n represents an integer of 1 to 4, and m represents a number satisfying 0 ≤ m ≤ 5).

3. The method according to claim 2, wherein M²⁺ in formula (1) is one or more metal ions from among Mg²⁺ and Zn²⁺ ions, and M³⁺ is Al³⁺.

4. The method according to claim 2 or 3, wherein Aⁿ⁻ in formula (1) is CO₃²⁻.

5. (Deleted)

6. (Corrected) The method according to any one of claims 1 to 4, wherein an acid in the aqueous acid solution is at least one type of acid selected from a group consisting of an inorganic acid, inorganic acid salt, organic acid and organic acid salt.

7. (Corrected) The method according to any one of claims 1 to 4 or 6, wherein a water content of the aqueous acid solution is in a range of 10 to 70 mass%.

8. (Corrected) The method according to any one of claims 1 to 4, 6 or 7, wherein the first step further includes a step of supplying the aqueous acid solution onto the hydrotalcite powder or paste, a supply rate of the aqueous acid solution being 0.5 to 710 mass%/min with respect to a mass of the hydrotalcite.

Statement under Art. 19.1 PCT

Content of amendment
   (1) Previous claim 1 has been amended by incorporating therein the feature of previous claim 5, which has been cancelled.
   (2) Previous claims 6 to 8 have been amended to proper dependent form due to cancellation of previous claim 5, while claims 2 to 4 are retained unchanged.
Explanation

This amendment is limited to the invention according to claim 5 and claims dependent thereon.
